# EUROPÄISCHE PATENTSCHRIFT

(11) **EP 2 460 601 B1**
(45) Veröffentlichungstag und Bekanntmachung des Hinweises auf die Patenterteilung: **16.06.2021**
(21) Anmeldenummer: 11180856.4
(22) Anmeldetag: 12.09.2011
(51) Int. Cl.: B21J 15/32, B23P 19/00

(54) **Nietbereitstellungseinrichtung**
Rivet supply device
Dispositif d'alimentation en rivets

(30) Priorität: 03.12.2010 DE 102010053220
(43) Veröffentlichungstag der Anmeldung: 06.06.2012
(73) Patentinhaber: Broetje-Automation GmbH, 26180 Rastede (DE)
(72) Erfinder: Völz, Matthias, 26127 Oldenburg (DE)
(74) Vertreter: Gottschald, Jan

(56) Entgegenhaltungen:
- FR-A1- 2 842 181
- US-A1- 2003 034 355
- US-A1- 2005 006 427

## Beschreibung

Die Erfindung betrifft eine Nietbereitstellungseinrichtung zur Bereitstellung von Nietelementen o. dgl. gemäß Anspruch 1.

Nietverbindungen spielen seit vielen Jahren vor allem in der Luftfahrtindustrie eine wichtige Rolle. Dabei kommt der Automatisierung von Nietanwendungen im Hinblick auf die immer größer werdenden Flugzeugkomponenten zunehmende Bedeutung zu.

Neben der Durchführung von Nietanwendungen mittels Nietwerkzeugen stellt die zielgenaue und schnelle Bereitstellung von Nietelementen über eine entsprechende Bewegungssteuerung eine besondere Herausforderung für die Anlagenhersteller dar.

Eine bekannte Nietbereitstellungseinrichtung (EP 1 531 966 B1) ist mit einem als Kassettenschrank ausgestalteten Nietspeicher ausgestattet, der eine Anzahl übereinander gestapelter Nietkassetten aufweist. Mittels eines Übergabeschlittens, der sich entlang der Nietkassetten verfahren lässt, werden Nietelemente von der jeweils angefahrenen Nietkassette an einen Nietausgang übergeben.

Die US 2005/0006427 A1 und die US 2003/034355 A1 beschreiben jeweils ein tragbares Befestigungselementbereitstellungssystem mit einer Befestigungselementkassette. Die Befestigungselementkassette wird bei dem tragbaren Befestigungselementbereitstellungssystem in eine Befestigungselementkassettenführung, welche an einem Rahmen angeordnet ist, gebracht und entlang dieser bis zu einem Anschlag bewegt. Dann wird die Befestigungselementkassette durch eine Schwenkklinke fixiert.

Die Nietkassetten der bekannten Nietbereitstellungseinrichtung lassen sich manuell von der Vorderseite der Nietbereitstellungseinrichtung austauschen, insbesondere für den Fall, dass der Nietvorrat in der Nietkassette aufgebraucht ist. Hierfür sind die Nietkassetten über eine Kassettenführung in eine Betriebsstellung einschiebbar. Für die Fixierung der Nietkassetten in der jeweiligen Betriebsstellung ist jeder Nietklasse eine Kassettenverriegelung zugeordnet.

Die Kassettenverriegelung ist regelmäßig einem frontseitgen Rahmen der Nietbereitstellungseinrichtung zugeordnet. Dabei ist eine exakte Positionierung der Kassettenverriegelung relativ zu der Nietkassette nur durch ein entsprechend exaktes Ausrichten der Kassettenverriegelung bei der Erstmontage zu gewährleisten. Der Grund hierfür besteht darin, dass bei der bekannten Anordnung mit ganz erheblichen Toleranzen zwischen dem frontseitigen Rahmen und der Nietbereitstellungseinrichtung im Übrigen, insbesondere der Kassettenführung, zu rechnen ist.

Der Erfindung liegt das Problem zugrunde, eine exakte Positionierung der Kassettenverriegelung relativ zu der jeweiligen Nietkassette mit geringem konstruktivem Aufwand zu erreichen.

Das obige Problem wird durch eine Nietbereitstellungseinrichtung mit den Merkmalen von Anspruch 1 gelöst.

Wesentlich ist die Überlegung, die Kassettenverriegelung der Kassettenführung zuzuordnen, die ja die Lage der Nietkassette jedenfalls in einem Bewegungs-Freiheitsgrad bestimmt. Damit lässt sich bei geeigneter Auslegung auf ein Ausrichten der Kassettenverriegelung verzichten, was zu erheblichen Kosteneinsparungen in der Fertigung führt.

Bevorzugte Ausgestaltungen sind in den Ansprüchen 2 und 3 beschrieben. Diese führen zu einer weiteren Vereinfachung bei der exakten Einnahme der Betriebsstellung der Nietkassette.

Eine im Hinblick auf die resultierende Kompaktheit besonders vorteilhafte Ausgestaltung ist Gegenstand der Ansprüche 5 und 6 . Hier ist ein pneumatischer Aktuator vorgesehen, der mit einem Verriegelungsmechanismus zusammenwirkt.

Im Folgenden wird die Erfindung anhand einer lediglich ein Ausführungsbeispiel darstellenden Zeichnung näher erläutert. In der Zeichnung zeigt
- Fig. 1: eine vorschlagsgemäße Nietbereitstellungseinrichtung in einer perspektivischen Ansicht schräg von vorne,
- Fig. 2: zwei seriell geschaltete Nietbereitstellungseinrichtungen gemäß Fig. 1 im Betrieb mit einem nur schematisch dargestellten Nietwerkzeug, jeweils in einer Seitenansicht,
- Fig. 3: die Kassettenverriegelungen der Nietbereitstellungseinrichtung gemäß Fig. 1 a) im verriegelten Zustand und b) im entriegelten Zustand, jeweils in einer perspektivischen Ansicht,
- Fig. 4: eine zentrale Montageplatte der Nietbereitstellungseinrichtung gemäß Fig. 1 bei montiertem Übergabeschlitten in einer perspektivischen Ansicht,
- Fig. 5: die Nietsteuerung des Übergabeschlittens gemäß Fig. 4 in einer perspektivischen Ansicht,
- Fig. 6: die Nietsteuerung gemäß Fig. 5 in einer Schnittansicht entlang der Schnittlinie VI-VI a) in der Durchlassstellung und b) in der Sperrstellung,
- Fig. 7: die Steuerwelle der Nietsteuerung gemäß Fig. 5 in einer perspektivischen Ansicht.

Die in der Zeichnung dargestellte Nietbereitstellungseinrichtung R dient der automatisierten Bereitstellung von Nietelementen 1 o. dgl.. Dabei ist der Begriff "Nietelement" weit zu verstehen und umfasst alle möglichen Verbindungselemente, die in irgendeiner Weise nietähnlich ausgestaltet sind.

In der Nietbereitstellungseinrichtung R bevorratete Nietelemente 1 werden bei bestimmungsgemäßem Gebrauch vorzugsweise an eine Nietsteuerung übergeben, von der Nietsteuerung empfangen und zu der jeweiligen Nietanwendung weitertransportiert.

Die Nietbereitstellungseinrichtung R ist vorzugsweise mit einer ganz speziellen Nietsteuerung ausgestattet. Eine Erläuterung deren bevorzugter Ausgestaltung wird nun im Sinne einer vollständigen Darstellung vorangestellt.

Die Nietsteuerung dient ganz allgemein der Bewegungssteuerung von Nietelementen 1 o.dgl.. Die Bewegungssteuerung der Nietelemente 1 umfasst sowohl ein aktives Antreiben der Nietelemente 1 als auch ein passives Sperren oder Freigeben der Nietelemente 1. Im Zusammenhang mit einer obigen Nietbereitstellungseinrichtung R kommt der Nietsteuerung vorzugsweise die Funktion des Empfangs und der Weiterleitung von Nietelementen 1 zu, wie noch gezeigt wird. Insoweit ist auch der Begriff "Bewegungssteuerung" weit zu verstehen.

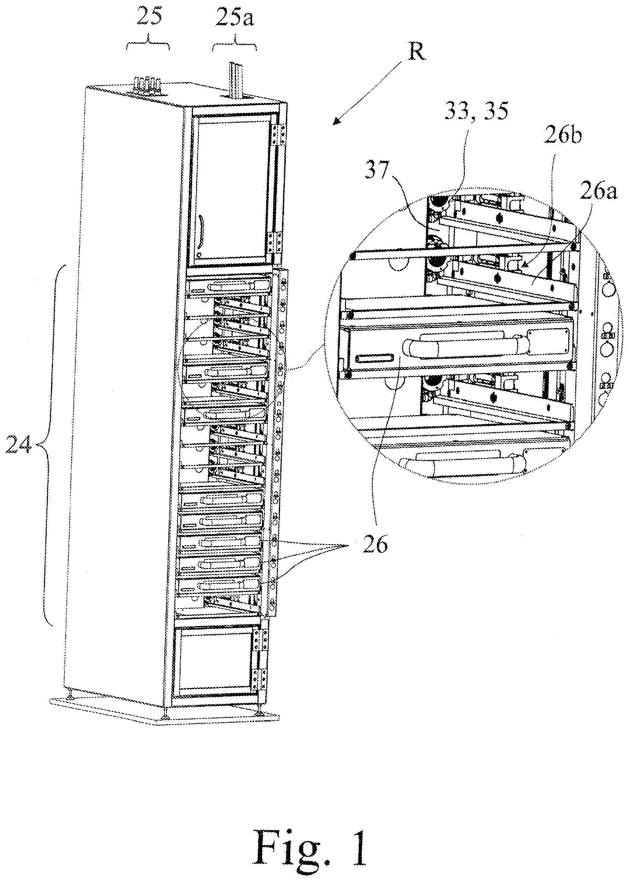

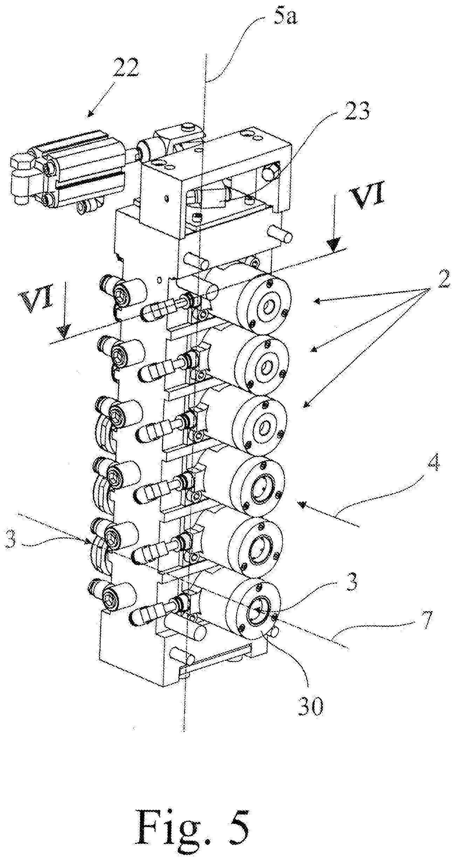

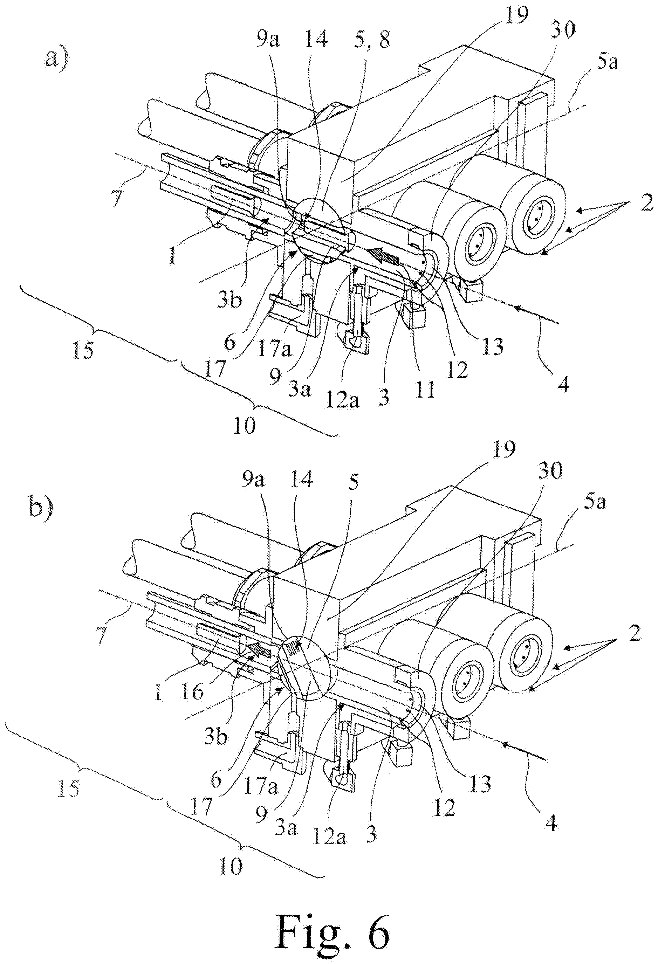

Die Fig. 5 bis 7 zeigen eine bevorzugte Nietsteuerung, die hier und vorzugsweise in der in den Fig. 1 bis 4 dargestellten Nietbereitstellungseinrichtung R Anwendung findet. Die Nietsteuerung ist grundsätzlich modular aufgebaut und weist mindestens eine Nietsteuereinheit 2, hier insgesamt sechs Nietsteuereinheiten 2, auf. Der Aufbau einer Nietsteuereinheit 2 lässt sich den Darstellungen gemäß Fig. 6 entnehmen. Im Folgenden ist im Sinne einer übersichtlichen Darstellung fast durchweg die Rede von nur einer einzigen Nietsteuereinheit 2. Alle Ausführungen zu dieser Nietsteuereinheit 2 gelten für alle weiteren Nietsteuereinheiten 2 der Nietsteuerung entsprechend.

Im montierten Zustand ist die Nietsteuerung in den Niet-Materialfluss geschaltet. Hierfür ist jede Nietsteuereinheit 2 mit einem Nietkanal 3 ausgestattet, durch den die jeweiligen Nietelemente 1 vorschiebbar sind.

Der Transport der Nietelemente 1 erfolgt hier und vorzugsweise über eine Fluidströmung, die in den jeweiligen Abschnitt des Nietkanals 3 eingeleitet wird. Bei dem Fluid handelt es sich im einfachsten Fall um Luft.

Der Nietkanal 3 weist einen Eingangsabschnitt 3a für den Empfang von Nietelementen 1 und einen Ausgangsabschnitt 3b auf. Die Nietelemente 1 verlaufen entsprechend in Förderrichtung 4 vom Eingangsabschnitt 3a zum Ausgangsabschnitt 3b und von dort zu der jeweiligen Nietanwendung.

Die Nietsteuereinheit 2 der Nietsteuerung weist eine Steuerwelle 5 auf, die den Nietkanal 3 in einem Steuerbereich 6 zwischen dem Eingangsabschnitt 3a und dem Ausgangsabschnitt 3b durchdringt. Dabei kann es grundsätzlich vorgesehen sein, dass die Steuerwelle 5 nur einen Teil des Nietkanals 3 durchdringt. Hier und vorzugsweise ist allerdings eine Durchdringung des vollständigen Nietkanals 3, weiter vorzugsweise im Wesentlichen quer zur Nietkanal-Längsachse 7, vorgesehen.

Letztlich wirkt die Steuerwelle 5 hier nach Art eines Absperrventils. Entsprechend stellt die Steuerwelle 5 in der in Fig. 6a dargestellten Durchlassstellung einen für Nietelemente 1 und Fluid offenen Verbindungsabschnitt 8 zwischen dem Eingangsabschnitt 3a und dem Ausgangsabschnitt 3b bereit. Fig. 6b dagegen zeigt, dass die Steuerwelle 5 in einer Sperrstellung den Durchtritt von Nietelementen 1 und/oder von Fluid zwischen dem Eingangsabschnitt 3a und dem Ausgangsabschnitt 3b im Wesentlichen sperrt.

Zur konstruktiven Umsetzung von Durchlassstellung und Sperrstellung wird vorgeschlagen, dass die Steuerwelle 5 eine in Fig. 6 dargestellte Nietkanal-Durchgangsbohrung 9 aufweist, deren Querschnitt im Wesentlichen dem Querschnitt des Nietkanals 3 im Eingangsabschnitt 3a und/oder im Ausgangsabschnitt 3b entspricht. Je nach Stellung der Steuerwelle 5 stellt die Nietkanal-Durchgangsbohrung 9 den oben angegebenen Verbindungsabschnitt 8 zwischen dem Eingangsabschnitt 3a und dem Ausgangsabschnitt 3b des Nietkanals 3 bereit oder sperrt die Nietkanal-Durchgangsbohrung 9 den Durchtritt von Nietelementen 1 und/oder von Fluid zwischen dem Eingangsabschnitt 3a und dem Ausgangsabschnitt 3b.

Die Funktion der Nietsteuereinheit 2 beschränkt sich aber nicht auf die reine Funktion eines Absperrventils. Vielmehr weist die Nietsteuereinheit 2 eine Übergabe-Fördereinrichtung 10 auf, die dem Fördern eines Nietelements 1 vom Eingangsabschnitt 3a in den Ausgangsabschnitt 3b hinein mittels einer Übergabe-Fluidströmung 11 dient (Fig. 6a). Hierfür weist die Übergabe-Fördereinrichtung 10 mehrere Fluidkanäle 12 auf, die mit dem Eingangsabschnitt 3a des Nietkanals 3 kommunizieren und über die die Übergabe-Fluidströmung 11 erzeugbar ist. Hierfür sind die Fluidkanäle 12 mit einer entsprechenden Fluidzufuhr 12a gekoppelt. Die Richtung der Übergabe-Fluidströmung 11 geht auf die Ausrichtung der Fluidkanäle 12 zurück, die sich aus der Darstellung gemäß Fig. 6 ergibt.

Es hat sich gezeigt, dass sich zusammen mit der konischen Öffnung 13 des Eingangsabschnitts 3a durch die Übergabe-Fluidströmung 11 ein Unterdruck im Bereich der konischen Öffnung 13 nach Art des Venturi-Effekts einstellt, der zu einem Ansaugen eines vor der Öffnung 13 befindlichen Nietelements 1 führt.

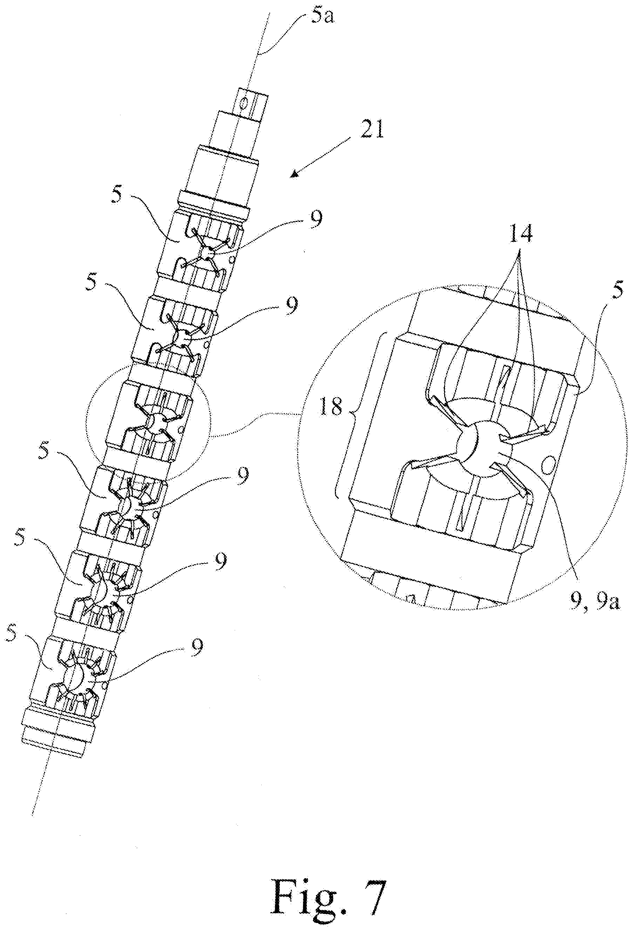

Für den effektiven Transport der Nietelemente 1 muss ein bestimmter Fluid-Volumenstrom sichergestellt sein. Hierfür weist die Übergabe-Fördereinrichtung 10 im Bereich der Steuerwelle 5 mindestens eine Entlüftungsöffnung 14 auf, über die zumindest ein Teil der Übergabe-Fluidströmung 11 abströmt. In einer konstruktiv besonders einfach zu realisierenden Variante ist es hierfür vorgesehen, dass die Steuerwelle 5 eine Reihe von in eine Austrittsöffnung 9a der Nietkanal-Durchgangsbohrung 9 mündenden Entlüftungsrillen 14 aufweist (Fig. 6, 7).

Weiter ist die Nietsteuereinheit 2 mit einer Transport-Fördereinrichtung 15 zum Weitertransport eines Nietelements 1 vom Ausgangsabschnitt 3b zur Nietanwendung mittels einer Transport-Fluidströmung 16 ausgestattet. Der Transport des Nietelements 1 erfolgt dabei in der in Fig. 6b) dargestellten Konstellation.

Hinsichtlich der Fluidströmung kann die Steuerwelle 5 in der Sperrstellung wie schon angedeutet eine unterschiedliche Dichtigkeit bereitstellen. Hier und vorzugsweise ist die Steuerwelle 5 mit einer Dichtungsfläche 18 ausgestattet, die der Abdichtung gegenüber dem Gehäuse 19 der Nietsteuereinheit 2 dient.

Fig. 7 zeigt, dass bei dem dargestellten und insoweit bevorzugten Ausführungsbeispiel mehrere Steuerwellen 5 zu einer gemeinsamen Steuerwelle 21 zusammengefasst worden sind. Das trägt dem Umstand Rechnung, dass hier mindestens zwei nebeneinader angeordnete Nietsteuereinheiten 2, im einzelnen insgesamt sechs nebeneinander angeordnete Nietsteuereinheiten 2, vorgesehen sind, wobei die Steuerwellen 5 der Nietsteu ereinheiten 2 jeweils durch einen axialen Abschnitt der gemeinsamen Steuerwelle 21 bereitgestellt sind.

Die in den Fig. 1 bis 4 dargestellte, vorschlagsgemäße Nietbereitstellungseinrichtung R ist nun wie schon erläutert vorzugsweise mit einer oben angesprochenen Nietsteuerung ausgestattet.

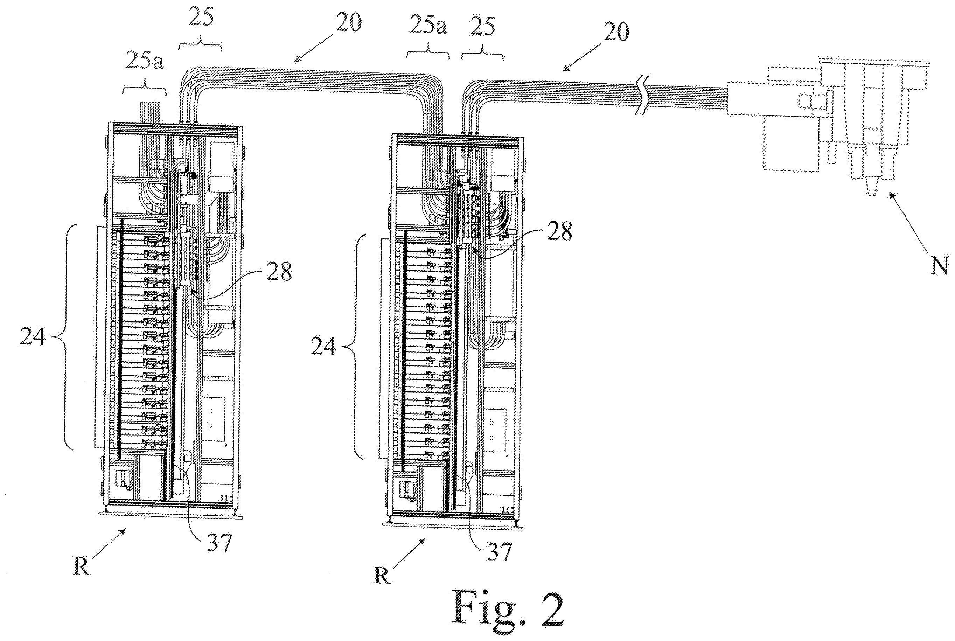

Die Nietbereitstellungseinrichtung R dient, wie ebenfalls schon angedeutet, zur Bereitstellung von Nietelementen 1 o.dgl. für mindestens eine Nietanwendung. In Fig. 2 ist angedeutet, dass die Nietanwendung von einem automatisierten Nietwerkzeug N umge setzt wird. Fig. 2 zeigt ferner, dass dort zwei Nietbereitstellungseinrichtungen R in Serie geschaltet sind, was weiter unten noch erläutert wird.

Die Nietbereitstellungseinrichtung R verfügt über einen Nietspeicher 24, in dem vor zugsweise unterschiedliche Nietelemente 1 gespeichert werden können. Weiter verfügt die Nietbereitstellungseinrichtung R über mindestens einen Nietausgang 25, hier über insgesamt 6 Nietausgänge 25.

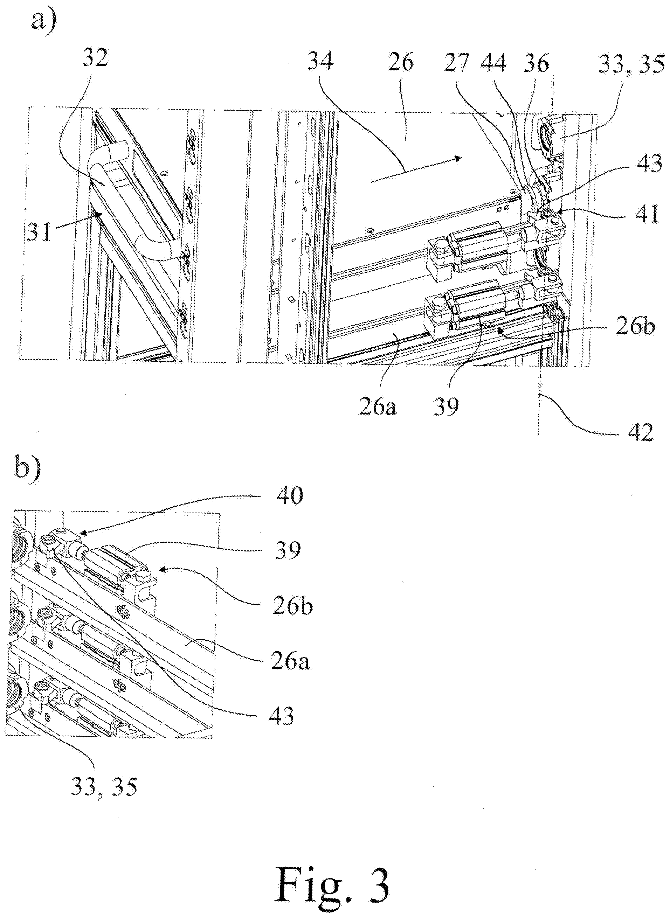

Der Nietspeicher 24 ist hier nach Art eines Kassettenschranks mit mindestens zwei ge stapelten, austauschbaren Nietkassetten 26 ausgestattet, die jeweils mindestens einen Ausgangsflansch 27 o. dgl. zur Abgabe von Nietelementen 1 aufweisen. Der Ausgangsflansch 27 der Nietkassette 26 kann unterschiedlich ausgestaltet sein. Hier und vorzugsweise ist der Ausgangsflansch 27 rohrartig ausgestaltet, wie der Darstellung in Fig. 3a) zu entnehmen ist.

In besonders bevorzugter Ausgestaltung ist weiter ein Übergabeschlitten 28 vorgesehen, der eine oben erläuterte Nietsteuerung mit hier und vorzugsweise mehreren Nietsteuer einheiteil 2 aufweist. Die Nietsteuereinheiten 2 sind jeweils auf unterschiedliche Niet elemente 1 hin ausgelegt, so dass je nachdem, welches Nietelement 1 übergeben werden soll, die passende Nietsteuereinheit 2 zum Einsatz kommt.

Um die jeweils passende Nietsteuereinheit 2 auf die jeweils gewünschte Nietkassette 26 ausrichten zu können, ist der Übergabeschlitten 28 entlang der Nietkassetten 26 in deren Stapelrichtung 29 verfahrbar. Damit ist eine Nietsteuereinheit 2 der Nietsteuerung auf eine Nietkassette 26 zur Übergabe eines Nietelements 1 von der jeweiligen Nietkas sette 26 auf die jeweilige Nietsteuereinheit 2 ausrichtbar.

Zwei Stellungen des Übergabeschlittens 28 sind in Fig. 2 gezeigt. Die Ausgangsab schnitte 3b der Nietsteuereinheiten 2 sind mit den oben angesprochenen Nietausgängen 25 verbunden. Ferner ist es so, dass jede Nietsteuereinheit 2 einen dem Eingangsab schnitt 3a des Nietkanals 3 zugeordneten Eingangsflansch 30 für den Empfang von Nietelementen 1 aufweist, wobei bei der Übergabe eines Nietelements 1 der nietkasset tenseitige Ausgangsflansch 27 und der nietsteuerseitige Eingangsflansch 30 über einen Spalt beabstandet sind.

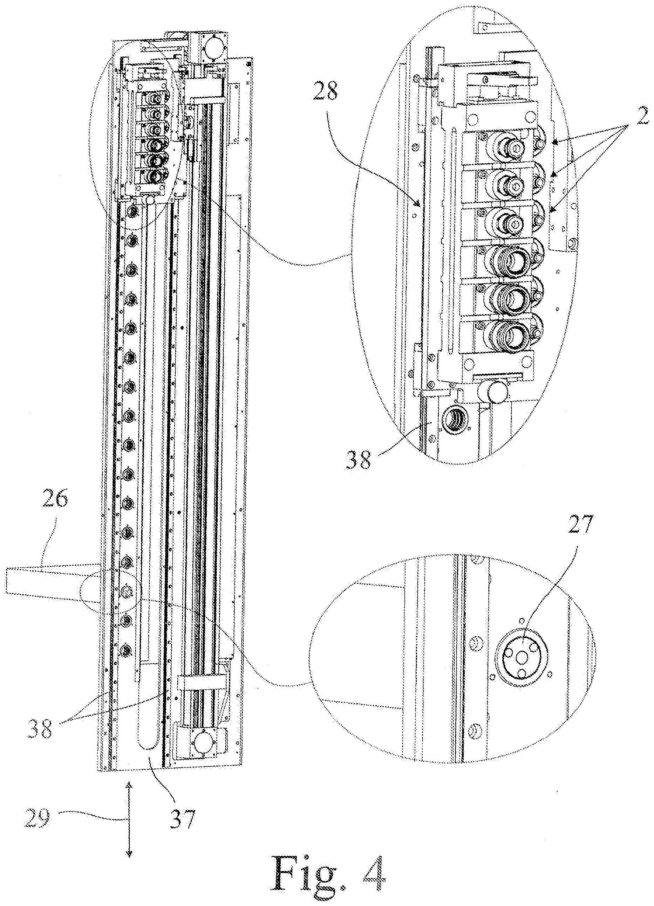

Ein irgendwie gearteter Formschluss zwischen den beiden Flanschen 27, 30 findet also nicht statt. Fig. 4 zeigt in der unteren Detaildarstellung, wie der nietkassettenseitige Ausgangsflansch 27 gegenüber der Nietsteuerung und den dortigen Eingangsflanschen 30 positioniert ist. Dadurch, dass stets ein Spalt zwischen den nietkassettenseitigen Ausgangsflanschen 27 und den nietsteuerseitigen Eingangsflanschen 30 besteht, ist es ausreichend, den Übergabeschlitten 28 und die Nietsteuerung insgesamt in nur einem einzigen Freiheitsgrad zu bewegen. Um eine fehlerfreie Übergabe zu gewährleisten, hat es sich als vorteilhaft erwiesen, wenn der Spalt in einem Bereich zwischen etwa 0,2 mm und etwa 0,6 mm liegt. Besonders bevorzugt ist hier eine Spaltbreite von etwa 0,4 mm.

Es wurde schon darauf hingewiesen, dass die unterschiedlichen Nietkassetten 26 vorzugsweise zumindest zum Teil Nietelemente 1 unterschiedlicher Abmessungen speichern, wobei der Übergabeschlitten 28 entsprechend mehrere, auf die unterschiedlichen Abmessungen angepasste Nietsteuereinheiten 2 aufweist. Die Anpassung der Nietsteuereinheiten 2 betrifft in erster Linie den Durchmesser des Nietkanals 3 und die entsprechenden Anschlüsse, wie sich beispielsweise aus der oberen Detaildarstellung in Fig. 4 ergibt.

Eine beispielhafte Übergabe eines Nietelements 1 von einer Nietkassette 26 wird im Folgenden erläutert.

Zunächst richtet der Übergabeschlitten 28 eine der Nietsteuereinheiten 2 auf die gewünschte Nietkassette 26 aus, so dass der nietsteuerseitige Eingangsflansch 30 auf den nietkassettenseitigen Ausgangsflansch 27 zentriert ist. Eine in der Nietkassette 26 vorgesehene, nicht dargestellte Vereinzelungseinrichtung gibt dann ein einzelnes Nietelement 1 frei, das den Spalt zwischen den beiden Flanschen 27, 30 passiert und vom Eingangsabschnitt 3a der Nietsteuereinheit 2 empfangen wird. Hierfür wird die Übergabe-Fördereinrichtung 10 rechtzeitig aktiviert, so dass das Nietelement 1 über den oben angesprochenen Venturi-Effekt in den Eingangsabschnitt 3a hineingezogen und anschließend mittels der Übergabe-Fluidströmung 11 in den Ausgangsabschnitt 3b gefördert wird. Dann wird die bis hierhin in der Durchlassstellung befindliche Steuerwelle 21 in die Sperrstellung überführt (Übergang von Fig. 6a auf Fig. 6b). Schließlich wird die Transport-Fördereinrichtung 15 aktiviert, so dass Nietelement 1 durch den Aufbau einer Druckwelle über die Fluidkanal-Durchgangsbohrung 17 zum Nietwerkzeug N über die Schlauchleitung 20 weitertransportiert wird.

Ein interessanter Aspekt besteht darin, dass die Nietbereitstellungseinrichtung R so ausgestaltet ist, dass sie mit einer weiteren Nietbereitstellungseinrichtung R in Serie geschaltet werden kann (Fig. 2). Neben dem Nietausgang 25 ist hierfür mindestens ein Nieteingang 25a vorgesehen, wobei die Anordnung so getroffen ist, dass ein an einem Nieteingang 25a bereitgestelltes Nietelement 1 an den Nietausgang 25 durchreichbar ist. Damit lässt sich ein Nietwerkzeug N von mehreren Nietbereitstellungseinrichtungen R mit Nietelementen 1 versorgen, ohne dass eine irgendwie geartete Förderweiche zwischen den Nietbereitstellungseinrichtungen R und dem Nietwerkzeug N vorgesehen sein muss.

Maßgeblich für die vorschlagsgemäße Lehre ist nun die besondere Art der Festlegung der an der Vorderseite 31 der Nietbereitstellungseinrichtung R u.a. mittels Handgriff 32 austauschbaren Nietkassetten 26 in ihren jeweiligen Betriebsstellungen, ohne dass es auf die Existenz eines oben genannten Übergabeschlittens 28 ankommt.

Wie oben erläutert, dient die Nietbereitstellungseinrichtung R zur Bereitstellung von Nietelementen 1 aus einem Nietspeicher 24 über mindestens einen Nietausgang 25 für mindestens ein Nietwerkzeug N, wobei der Nietspeicher 24 mindestens zwei obige, gestapelte, austauschbare Nietkassetten 26 mit jeweils mindestens einem Ausgangsflansch 27 o. dgl. zur Abgabe von Nietelementen 1 aufweist.

Den Nietkassetten 26 ist jeweils eine Kassettenführung 26a und eine lösbare Kassettenverriegelung 26b zugeordnet, wobei eine Nietkassette 26 zu deren Einbau über die Kassettenführung 26a bis zu einer Betriebsstellung einschiebbar und dort mittels der Kassettenverriegelung 26b fixierbar ist. Die Kassettenführung 26a und die Kassettenverriegelung 26b ergibt sich aus einer Zusammenschau der Fig. 1 und 3.

Wesentlich ist nun, dass die Kassettenverriegelung 26b, wie aus den Darstellungen gemäß Fig. 3 ersichtlich, der Kassettenführung 26a zugeordnet und zur Verriegelung in Eingriff mit der Nietkassette 26 bringbar ist.

Damit stützt sich die Kassettenverriegelung 26b an der Kassettenführung 26a ab, die aufgrund ihrer Führungseigenschaften nur wenig toleranzbehaftet ausgelegt ist. Dies bildet die Voraussetzung für eine möglichst genaue Einnahme der jeweiligen Verriegelungsposition (Betriebsstellung). Dadurch, dass die Kassettenverriegelung 26b durch ihre Anordnung an der Kassettenführung 26a stets eine definierte Position relativ zu der Nietkassette 26 einnimmt, kann auf ein aufwendiges Justieren der Kassettenverriegelung 26b bei deren Montage verzichtet werden.

Die genaue Einnahme der Betriebsstellung ist von ganz besonderer Bedeutung, wenn den Nietkassetten 26 ein oben angesprochener Übergabeschlitten 28 zugeordnet sein soll. Sofern ferner die ebenfalls erläuterte Konstellation mit einem Spalt zwischen nietkassettenseitigem Ausgangsflansch 27 und nietsteuerseitigen Eingangsflansch 30, dessen Breite sich im 1/10 mm-Bereich bewegt, vorgesehen sein soll, ist die genaue Einnahme der Betriebsposition sogar funktionsnotwendig.

Die Fig. 1 und 3 zeigen eine besonders einfache konstruktive Umsetzung der Kassettenverriegelung 26b, die höchsten Genauigkeitsanforderungen gerecht wird. Der Grund hierfür besteht darin, dass die Kassettenverriegelung 26b die Nietkassette 26 im verriegelten Zustand an einen ortsfesten Kassettenanschlag 33 andrückt, wobei hier und vorzugsweise die Andrückrichtung 34 der Einschiebrichtung der Nietkassette 26 entspricht.

Für die Ausgestaltung des Kassettenanschlags 33 sind eine ganze Reihe von Möglichkeiten denkbar. Hier und vorzugsweise wird der ortsfeste Kassettenanschlag 33 durch einen Montageflansch 35 gebildet, durch den der Ausgangsflansch 27 der jeweiligen Nietkassette 26 zumindest zum Teil hindurch ragt (siehe Zusammenschau Fig. 3a und Fig. 4, untere Detaildarstellung). Bei dem dargestellten und insoweit bevorzugten Ausführungsbeispiel ist der Ausgangsflansch 27 der Nietkassette 26 mit einem umlaufenden Bund 36 ausgestattet worden, der einen Gegenanschlag zu dem Montageflansch 35 bildet.

Die Verwendung des ohnehin vorhandenen Ausgangsflansches 27 der Nietkassette 26 ist einerseits konstruktiv effizient. Andererseits ist dies auch unter Toleranzgesichtspunkten vorteilhaft, da der Montageflansch 25 gewissermaßen eine Referenzposition bezogen auf die Lage des Übergabeschlittens 28 darstellt.

Besonders gute Resultate im Hinblick auf die Reduzierung von Toleranzen lassen sich, wie hier dargestellt, dadurch realisieren, dass eine Montageplatte 37 vorgesehen ist, an der die Kassettenführung 26a und der Kassettenanschlag 33 bzw. der Montageflansch 35 angeordnet sind. Damit lässt sich im verriegelten Zustand ein nahezu geschlossener Kraftfluss zwischen der Kassettenführung 26a, der Kassettenverriegelung 26b, dem Ausgangsflansch 27 der Nietkassette 26, dem Kassettenanschlag 33 bzw. dem Montageflansch 35 und der Montageplatte 37 erreichen. Entsprechend gering werden bei geeigneter Auslegung die resultierenden Toleranzen hinsichtlich der Einnahme der Betriebs stellung ausfallen.

Dadurch, dass es bei dem dargestellten und insoweit bevorzugten Ausführungsbeispiel auf die genaue Positionierung des Ausgangsflansches 27 der Nietkassette 26 relativ zu den Übergabeschlitten 28 ankommt, ist es vorteilhafterweise vorgesehen, dass auch der Übergabeschlitten 28 an der Montageplatte 37 angeordnet ist. Es lässt sich der Darstellung gemäß Fig. 4 entnehmen, dass der Übergabeschlitten 28 auf zwei Schienen 38 läuft, die auf der den Nietkassetten 26 abgewandten Seite der Montageplatte 37 befestigt sind.

Die Kassettenverriegelung 26b ist vorzugsweise motorisch betätigbar. Im einfachsten Fall ist der Kassettenverriegelung 26b ein linearer Aktuator 39 zugeordnet, bei dem es sich vorzugsweise um einen pneumatischen Aktuator handelt. Der pneumatische Aktuator 39 ist einerends mit der Kassettenführung 26a und anderenends mit einem Verriegelungsmechanismus 40 gekoppelt. Dies lässt sich den Darstellungen gemäß Fig. 3 gut entnehmen.

Auch der Verriegelungsmechanismus 40 ist bei dem dargestellten Ausführungsbeispiel konstruktiv besonders einfach gestaltet. Der Verriegelungsmechanismus 40 weist nämlich lediglich einen schwenkbaren Verriegelungshebel 41 auf, der vorzugsweise an der Kassettenführung 26a angelenkt ist. Die Schwenkachse 42 des Verriegelungshebels 41 verläuft im Wesentlichen vertikal.

Im entriegelten Zustand liegt der Verriegelungshebel 41 außerhalb des Bewegungsbereichs der Nietkassette 26, so dass die Nietkassette 26 problemlos aus der Kassettenführung 26a geschoben werden kann. Zur Verriegelung bewirkt der Aktuator 39 ein Verschwenken des Verriegelungshebels 41 derart, dass eine Nase 43 des Verriegelungshebels 41 in Eingriff mit der Nietkassette 26, hier in Eingriff mit einem Teil des Ausgangsflansches 27 der Nietkassette 26 kommt. Für diesen Eingriff ist der Ausgangsflansch 27 der Nietkassette 26 wie in Fig. 3a dargestellt, mit einem weiteren Bund 44 ausgestattet.

Für die Lage des Aktuators 39 sind zahlreiche Möglichkeiten denkbar. Je nach konstruktiven Randbedingungen kann beispielsweise auch eine Anordnung des Aktuators 39 auf der dem Übergabeschlitten 28 zugewandten Seite der Montageplatte 37 vorteilhaft sein.

## Patentansprüche

1. Nietbereitstellungseinrichtung mit einem Nietspeicher (24) und mit mindestens einem Nietausgang (25) zur Bereitstellung von Nietelementen (1) o. dgl. aus dem Nietspeicher (24) über den mindestens einen Nietausgang (25) für mindestens eine Nietanwendung, wobei der Nietspeicher (24) mindestens zwei gestapelte, austauschbare Nietkassetten (26) mit jeweils mindestens einem Ausgangsflansch (27) o. dgl. zur Abgabe von Nietelementen (1) aufweist, wobei den Nietkassetten (26) jeweils eine Kassettenführung (26a) und eine lösbare Kassettenverriegelung (26b) zugeordnet ist, wobei eine Nietkassette (26) zu deren Einbau über die Kassettenführung (26a) bis zu einer Betriebsstellung einschiebbar und dort mittels der Kassettenverriegelung (26b) fixierbar ist und wobei die Kassettenverriegelung (26b) der Kassettenführung (26a) zugeordnet und zur Verriegelung in Eingriff mit der Nietkassette (26) bringbar ist,
wobei ein Übergabeschlitten (28) mit mindestens einer Nietsteuerung mit vorzugsweise mehreren Nietsteuereinheiten (2) für den Empfang und den Weitertransport von Nietelementen (1) vorgesehen ist,
wobei der Übergabeschlitten (28) entlang der Nietkassetten (26) in deren Stapelrichtung verfahrbar ist, so dass die Nietsteuerung auf eine Nietkassette (26) zur Übergabe eines Nietelements (1) von der jeweiligen Nietkassette (1) auf die Nietsteuerung ausrichtbar ist,
wobei die jeweiligen Nietsteuereinheiten (2) auf jeweils unterschiedliche Nietelemente (1) hin ausgelegt sind, so dass je nachdem welches Nietelement (1) übergeben werden soll, die passende Nietsteuereinheit (2) zum Einsatz kommt,
wobei jede Nietsteuereinheit (2) mit einem Nietkanal (3) ausgestattet ist, durch den die jeweiligen Nietelemente (1) vorschiebbar sind,
wobei jede Nietsteuereinheit (2) einen dem Eingangsabschnitt (3a) des Nietkanals (3) zugeordneten Eingangsflansch (30) für den Empfang von Nietelementen (1) aufweist, wobei bei der Übergabe eines Nietelements (1) der nietkassettenseitige Ausgangsflansch (27) und ein nietsteuerseitiger Eingangsflansch (30) über einen Spalt beabstandet sind.

2. Nietbereitstellungseinrichtung nach Anspruch 1, **dadurch gekennzeichnet, dass** die Kassettenverriegelung (26b) die Nietkassette (26) im verriegelten Zustand an einen ortsfesten Kassettenanschlag (33) andrückt, vorzugsweise, dass die Andrückrichtung (34) der Einschiebrichtung entspricht.

3. Nietbereitstellungseinrichtung nach Anspruch 2, **dadurch gekennzeichnet, dass** der ortsfeste Kassettenanschlag (33) durch einen Montageflansch (35) gebildet ist, durch den der Ausgangsflansch (27) der jeweiligen Nietkassette (26) zumindest zum Teil hindurchragt, vorzugsweise, dass die Kassettenverriegelung (26b) im verriegelten Zustand einen Bestandteil, insbesondere einen umlaufenden Bund (36), des Ausgangsflansches (27) an den Montageflansch (35) andrückt.

4. Nietbereitstellungseinrichtung nach einem der vorhergehenden Ansprüche, **dadurch gekennzeichnet, dass** eine Montageplatte (37) vorgesehen ist, an der die Kassettenführung (26a), der Kassettenanschlag (33) und der Übergabeschlitten (28) angeordnet sind.

5. Nietbereitstellungseinrichtung nach einem der vorhergehenden Ansprüche, **dadurch gekennzeichnet, dass** die Kassettenverriegelung (26b) einen linearen Aktuator (39), vorzugsweise einen pneumatischen Aktuator (39), aufweist, der einerends mit der Kassettenführung (26a) und anderenends mit einem Verriegelungsmechanismus (40) gekoppelt ist.

6. Nietbereitstellungseinrichtung nach Anspruch 5, **dadurch gekennzeichnet, dass** der Verriegelungsmechanismus (40) einen schwenkbaren Verriegelungshebel (41) aufweist, der vorzugsweise an der Kassettenführung (26a) angelenkt ist und der mittels des Akuators (39) in Eingriff mit der Nietkassette (26), insbesondere mit einem Bestandteil des Ausgangsflansches (27) der Nietkassette (26), schwenkbar ist.

## Claims

1. Rivet supply device having a rivet store (24) and having at least one rivet outlet (25) for providing rivet elements (1) or the like from the rivet store (24) via the at least one rivet outlet (25) for at least one riveting application, wherein the rivet store (24) has at least two stacked, exchangeable rivet cassettes (26) that each have at least one outlet flange (27) or the like for dispensing rivet elements (1), wherein the rivet cassettes (26) are each assigned a cassette guide (26a) and a releasable cassette lock (26b), wherein, to be installed, a rivet cassette (26) is able to be inserted via the cassette guide (26a) as far as an operating position and is able to be fixed there by means of the cassette lock (26b), and wherein the cassette lock (26b) is assigned to the cassette guide (26a) and, for locking, is able to be brought into engagement with the rivet cassette (26),
wherein a transfer carriage (28) having at least one rivet controller with preferably a plurality of rivet control units (2) for receiving and onwardly transporting rivet elements (1) is provided,
wherein the transfer carriage (28) is movable along the rivet cassettes (26) in the stack direction thereof, such that the rivet controller is able to be oriented towards a rivet cassette (26) for transferring a rivet element (1) from the rivet cassette (1) in question to the rivet controller,
wherein the respective rivet control units (2) are designed for respectively different rivet elements (1) such that, depending on which rivet element (1) is intended to be transferred, the appropriate rivet control unit (2) is used,
wherein each rivet control unit (2) is equipped with a rivet channel (3) through which the respective rivet elements (1) are able to be advanced,
wherein each rivet control unit (2) has an inlet flange (30), assigned to the inlet portion (3a) of the rivet channel (3), for receiving rivet elements (1), wherein, during the transfer of a rivet element (1), the outlet flange (27) on the rivet-cassette side and an inlet flange (30) on the rivet-control side are spaced apart via a gap.

2. Rivet supply device according to Claim 1, **characterized in that** the cassette lock (26b) presses the rivet cassette (26) in the locked state against a stationary cassette stop (33), preferably **in that** the pressing direction (34) corresponds to the insertion direction.

3. Rivet supply device according to Claim 2, **characterized in that** the stationary rivet stop (33) is formed by a mounting flange (35) through which the outlet flange (27) of the rivet cassette (26) in question at least partially projects, preferably **in that** the cassette lock (26b), in the locked state, presses a constituent part, in particular an encircling collar (36), of the outlet flange (27) against the mounting flange (35).

4. Rivet supply device according to one of the preceding claims, **characterized in that** a mounting plate (37) is provided, on which the cassette guide (26a), the cassette stop (33) and the transfer carriage (28) are arranged.

5. Rivet supply device according to one of the preceding claims, **characterized in that** the cassette lock (26b) has a linear actuator (39), preferably a pneumatic actuator (39), which is coupled at one end to the cassette guide (26a) and at the other end to a locking mechanism (40) .

6. Rivet supply device according to Claim 5, **characterized in that** the locking mechanism (40) has a pivotable locking lever (41) which is preferably hinged to the cassette guide (26a) and which is pivotable by means of the actuator (39) into engagement with the rivet cassette (26), in particular with a constituent part of the outlet flange (27) of the rivet cassette (26).

## Revendications

1. Dispositif d'alimentation en rivets comprenant un magasin de rivets (24) et au moins une sortie de rivets (25) et destiné à fournir des éléments formant rivets (1) ou similaires depuis le magasin de rivets (24) par le biais de l'au moins une sortie de rivets (25) en vue d'au moins une application de rivetage, le magasins de rivets (24) comportant au moins deux cassettes de rivets (26) empilées et remplaçables qui comprennent chacune au moins une bride de sortie (27) ou similaire destinée à délivrer des éléments formant rivets (1), un guide de cassette (26a) et un moyen de verrouillage de cassette amovible (26b) étant associés à chacune des cassettes de rivets (26), une cassette de rivets (26) pouvant être insérée, par le biais du guide de cassette (26a), de façon à être placée à une position de fonctionnement où elle peut être fixée à l'aide du moyen de verrouillage de cassette (26b), et le moyen de verrouillage de cassette (26b) étant associé au guide de cassette (26a) et pouvant être amené en engagement avec la cassette de rivets (26) en vue du verrouillage,
un chariot de transfert (28) pourvu d'au moins une commande de rivets, de préférence d'une pluralité d'unités de commande de rivets (2), étant prévu pour recevoir et transporter des éléments formant rivets (1), le chariot de transfert (28) pouvant être déplacé le long des cassettes de rivets (26) dans la direction d'empilement de ceux-ci de sorte que la commande de rivets puisse être alignée sur une cassette de rivets (26) pour transférer un élément formant rivet (1) de la cassette de rivets respective (1) à la commande de rivets,
les unités de commande de rivets respectives (2) étant conçues pour différents éléments formant rivets (1) de sorte que l'unité de commande de rivets appropriée (2) est utilisée en fonction de l'élément formant rivet (1) à transférer, chaque unité de commande de rivets (2) étant équipée d'un canal de rivets (3) à travers lequel les éléments formant rivets respectifs (1) peuvent être avancés, chaque unité de commande de rivets (2) comportant une bride d'entrée (30) associée à la portion d'entrée (3a) du canal de rivets (3) et destinée à recevoir des éléments formant rivets (1), la bride de sortie côté cassette de rivets (27) et une bride d'entrée côté commande de rivets (30) étant espacées par une fente lorsqu'un élément formant rivet (1) est transféré.

2. Dispositif d'alimentation en rivets selon la revendication 1, **caractérisé en ce que** le moyen de verrouillage de cassette (26b) presse la cassette de rivets (26) à l'état verrouillé contre une butée de cassette fixe (33), de préférence **en ce que** le sens de pressage (34) correspond au sens d'insertion.

3. Dispositif d'alimentation en rivets selon la revendication 2, **caractérisé en ce que** la butée de cassette fixe (33) est formée par une bride de montage (35) à travers laquelle la bride de sortie (27) de la cassette de rivets respective (26) fait au moins partiellement saillie, de préférence **en ce que** le moyen de verrouillage de cassette (26b) presse à l'état verrouillé un composant, en particulier un collet circonférentiel (36), de la bride de sortie (27) contre la bride de montage (35).

4. Dispositif d'alimentation en rivets selon l'une des revendications précédentes, **caractérisé en ce qu'**une plaque de montage (37) est prévue sur laquelle le guide de cassette (26a), la butée de cassette (33) et le chariot de transfert (28) sont disposés.

5. Dispositif d'alimentation en rivets selon l'une des revendications précédentes, **caractérisé en ce que** le moyen de verrouillage de cassette (26b) comporte un actionneur linéaire (39), de préférence un actionneur pneumatique (39), qui est accouplé à une extrémité au guide de cassette (26a) et à l'autre extrémité à un mécanisme de verrouillage (40).

6. Dispositif d'alimentation en rivets selon la revendication 5, **caractérisé en ce que** le mécanisme de verrouillage (40) comporte un levier de verrouillage pivotant (41) qui est de préférence relié de manière articulée au guide de cassette (26a) et qui peut pivoter au moyen de l'actionneur (39) en engagement avec la cassette de rivets (26), en particulier avec un composant de la bride de sortie (27) de la cassette de rivets (26).
